# EUROPEAN PATENT APPLICATION

(11) **EP 4 821 753 A1**
(43) Date of publication of application: **14.10.2026**
(21) Application number: 25169833.8
(22) Date of filing: 10.04.2025
(51) Int. Cl.: B60L 58/22, B60L 58/12, H01M 10/42, H01M 10/48, H02J 7/00

(54) **CHARGE MONITORING DEVICE, CHARGE MONITORING SYSTEM, AND CHARGE MONITORING METHOD**

(71) Applicant: Munich Electrification GmbH, 81373 Munich (DE)
(72) Inventor: Senel, Emre Deniz, 81373 München (DE); Meiser, Michael, 81373 München (DE); Larranaga, Javier, 81373 München (DE); Goede, Stefan, 81373 München (DE)
(74) Representative: Grünecker Patent- und Rechtsanwälte PartG mbB

(57) **Abstract**

The present invention relates to a charge monitoring device, a charge monitoring system comprising a plurality of the charge monitoring devices, and a charge monitoring method. The charge monitoring device (100, 200) comprises cell monitoring circuitry (108, 208), which in operation, detects cell charge states of a plurality of battery cells arranged in a battery module (150) electrically connected to the charge monitoring device (100, 200), and which in operation, balances the charge state of at least one balancing target battery cell among the plurality of battery cells. The charge monitoring device (100, 200), in operation, is communicatively coupled to a charge transferring device (110), the charge transferring device (110) being configured to transfer charge between the battery module (150) connected to the charge monitoring device (100, 200) and an adjacent battery module (150), and the cell monitoring circuitry (108, 208), in operation, controls the charge transfer between the battery module (150) connected to the charge monitoring device (100, 200) and the adjacent battery module (150).

## Description

The present invention relates to a charge monitoring device, a charge monitoring system comprising a plurality of the charge monitoring devices, and a charge monitoring method.

Applications of power storage devices, like lithium-ion batteries are widespread, ranging from driving batteries in electric vehicles (EVs), in particular battery electric vehicles (BEV), and hybrid electric vehicles (HEV), in particular plug-in hybrid electric vehicles (PHEV), to storage batteries in stationary electrical energy storage (EES) systems.

Such system, for example, comprise high voltage (HV) batteries capable of supplying high voltages in a range between 400 V and 1000 V for EVs and up to 1500 V for EES systems. In future applications, even higher voltages may be supplied. For such purpose, the HV batteries may comprise around 80 to 300 battery cells ("cells") or more respectively connected in series and/or in parallel.

For a better cell management, the battery cells of the HV battery may be arranged into a plurality of battery modules, which are connected in series at HV connection nodes, so as to form the HV battery. This means, the battery modules function as subunits of the HV battery, thereby providing module voltages, which sum up to the predetermined high voltage output by the HV battery to a high voltage bus. For example, 5 to 24 battery cells, each with a cell voltages in the range of 3.3 V to 4.3 V, may be electrically connected in series to form a battery modules. Accordingly, in this example each battery module may provide a module voltage in the range between 15 V to 100 V.

For monitoring the plurality of battery cells, each battery module comprises a cell monitoring board (CMB) - in the following also "charge monitoring device" or "cell monitoring device". The CMB comprises cell monitoring circuitry (e.g. in the form of one or more "cell monitoring ICs"), which has detection circuitry, e.g. one or more analog-to-digital converter(s) (ADC(s)), for detecting a charge state of each of the battery cells arranged in the battery module. The charge state can be, for example, the cell voltage of the battery cell or the state of charge (SOC) of the battery cell. In addition, the cell monitoring circuitry usually comprises balancing switches and balancing resistors (as "balancing circuitry"), which allow discharging specific battery cells (determined as "balancing target battery cells") in order to (passively) balance (or "equalize") the charge states of the plurality of battery cells arranged in the battery module.

In addition, the HV battery is monitored by a battery management system (BMS). A central controller of the BMS may function as a balancing control device of the HV battery. The balancing control device acquires the detection data detected by the detection circuitry of all the CMBs of the battery modules, which form the HV battery. In turn, the balancing control device determines the cell states of the battery cells based on the detection data, and, if required, determines balancing target battery cell(s) that should be discharged to balance the charge states of the plurality of battery cells of the HV battery. If balancing target battery cell(s) are determined, the balancing control device transmits balancing instructions to the CMB(s) associated with the balancing target battery cell(s). Accordingly, the balancing control device, together with the CMBs of the plurality of battery modules form a charge monitoring system, which by the interplay of the balancing control device with the CMBs enables the balancing control device (or BMS) to substantially equalize the charge states of the plurality of battery cells.

In this context, the inventors of the present invention have found that there is still a need for enhancing the balancing efficiency of the charge monitoring system. For example, the variation between the cell states within a battery module may be relatively small, since all the battery cells of a same module experience similar environmental conditions. On the other hand, the variation between cell states of different battery modules may be larger, because the battery modules may experience different environmental conditions or may deteriorate in a different manner during their operational lifetime. For example, different battery modules may experience different heating, may be replaced at different times of usage, or their battery characteristics may slowly deviate due to a non-homogenous self-discharge of the battery cells, due to cell production tolerances or other non-deterministic events.

Accordingly, it is an object of the present invention to provide devices and methods, which can overcome the above described disadvantages and in particular contribute in improving the balancing efficiency of charge balancing between the battery modules, which form the HV battery, on a module level. Furthermore, it is an object of the present invention to provide a compact and economic solution.

At least one of these objectives is solved by the subject matter of the independent claims. Advantageous embodiments of the invention are the subject matter of the dependent claims.

According to a first aspect, the present disclosure provides a charge monitoring device, which comprises cell monitoring circuitry, which in operation, (is configured to) detects cell charge states of a plurality of battery cells arranged in a battery module electrically connected to the charge monitoring device, and which in operation, balances the charge state of at least one balancing target battery cell among the plurality of battery cells. The charge monitoring device, in operation, is (is configured to be) communicatively coupled to a charge transferring device, wherein the charge transferring device is configured to transfer charge between the battery module connected to the charge monitoring device and an adjacent battery module, and the cell monitoring circuitry, in operation, (is configured to) controls the charge transfer between the battery module connected to the charge monitoring device and the adjacent battery module.

In other words, the general concept of the present disclosure is based on the idea to communicatively couple a charge monitoring device (for example a charge monitoring board), which is configured to monitor charge states of a battery module on a battery cell level, to a charge transferring device (or "active balancing device"), which is electrically connected between the battery module and an adjacent battery module (e.g., of a same HV battery or HV battery string). The charge transferring device, which for example can be a DC/DC voltage converter, especially a bidirectional DC/DC voltage converter, allows the charge monitoring device to transfer charge between the two connected battery modules, so that module charge states of the two battery modules connected to the charge transferring device can be equalized. In this manner, the charge monitoring device enables a charge balancing control device (e.g. implemented in a main controller of a BMS or in a vehicle ECU) not only to balance the charge states of the battery cells arranged within the modules on a cell level, but also to balance the battery module charge states of the battery modules on a battery module level. Accordingly, the charge monitoring device facilitates improving the charge balancing efficiency for a HV battery (or HV battery string), which comprises a plurality of battery modules, since it facilitates the balancing of the battery module charge states on a battery module level.

According to a second aspect, the cell monitoring circuitry, in operation, controls the charge transfer between the battery module and the adjacent battery module based on a balancing instruction determined by a balancing control device. The balancing instruction comprises one or more of (i) identification information indicating a balancing target charge monitoring device, (ii) module balancing duration information indicating a duration of the charge transfer, (iii) target module charge state information indicating a target module charge state for the battery module; and (iv) module balancing direction information indicating a direction of the charge transfer.

In this manner, the balancing control device is enabled to supervise (as a master controller) the balancing of the battery module charge states of the battery modules of a HV battery on a battery module level, in addition to supervising the balancing of the battery cell charge states, which is individually performed by the charge monitoring devices of the battery modules.

According to a third aspect, the cell monitoring circuitry, in operation, controls the operation of the cell balancing circuitry based on the balancing instruction determined by the balancing control device. The balancing instruction comprises one or more of (i) cell balancing information indicating at least one balancing target battery cell, (ii) cell balancing duration information indicating one or more cell balancing duration(s) for balancing the at least one balancing target battery cell, and (iii) target cell charge state information indicating a target cell charge state for the at least one balancing target battery cell.

In this manner, the balancing control device is enabled to supervise (as a master controller) the balancing of the charge states of the battery modules of a HV battery on a battery module level, in addition to supervising the battery cell charge states, which is individually performed by the charge monitoring devices of the battery modules.

According to a fourth aspect, the cell monitoring circuitry, in operation, generates switching control signals for controlling the charge transfer between the battery module and the adjacent battery module and transmits the switching signals to the charge transferring device. In an optional implementation, the cell monitoring circuitry comprises a charge transferring microcontroller, which generates the switching control signals.

In this manner, the balancing control device facilitates simplifying the control of the battery module balancing within an HV battery, as the balancing control device (as a master controller) can communicate directly with the charge monitoring devices of the battery modules, but is not required to communicate with the charge transfer devices. Accordingly, already existing communication channels can be reused in a battery management system.

According to a fifth aspect, the charge monitoring device further comprises primary side feedback circuitry, which, in operation, detects a voltage applied to a primary side of the charge transferring device and/or a current flowing through the primary side of the charge transferring device, wherein the primary side is electrically connected to the battery module being electrically connected to the charge monitoring device, and the controlling of the charge transfer between the battery module connected to the charge monitoring device and the adjacent battery module includes determining switching states for at least one primary side semiconductor switch arranged on the primary side of the charge transferring device based on at least one of (i) the voltage applied to the primary side of the charge transferring device detected by the primary side feedback circuitry, and/or (ii) the current flowing through the primary side of the charge transferring device detected by the primary side feedback circuitry. In an optional implementation, the primary side feedback circuitry is integrated on a same semiconductor chip as the cell monitoring circuitry.

In this manner, the control of the charge transfer is facilitated for the charge monitoring device at least on the side of the charge transferring device, which is electrically connected to the battery module equipped with the charge monitoring device. Especially, the charge monitoring device receives a direct electronic feedback on the discharging or charging of the connected battery module resulting from the charge transfer.

According to a sixth aspect, the charge monitoring device further comprises secondary side feedback circuitry, which, in operation, detects a voltage applied to a secondary side of the charge transferring device and/or a current flowing through the secondary side of the charge transferring device, wherein the secondary side is electrically connected to the adjacent battery module, and the controlling of the charge transfer between the battery module connected to the charge monitoring device and the adjacent battery module includes determining switching states for at least one secondary side semiconductor switch arranged on the secondary side of the charge transferring device based on at least one of (i) the voltage applied to the secondary side of the charge transferring device detected by the secondary side feedback circuitry and/or (ii) the current flowing through the secondary side of the charge transferring device detected by the secondary side feedback circuitry. In an optional implementation, the secondary side feedback circuitry is integrated on a same semiconductor chip as the cell monitoring circuitry.

In this manner, the control of the charge transfer is facilitated for the charge monitoring device at least on the side of the charge transferring device, which is electrically connected to the adjacent (or "neighboring") battery module. Especially, the charge monitoring device receives a direct electronic feedback on the discharging or charging of the adjacent battery module resulting from the charge transfer.

According to a seventh aspect, the cell monitoring circuitry, in operation, controls the charge transferring device to generate an electrochemical impedance spectroscopy, EIS, excitation signal for performing EIS of the battery cells of the battery module connected to the charge monitoring device, and detects, for the plurality of battery cells arranged in the battery module, a response to the EIS excitation signal. In an optional implementation, the cell monitoring circuitry, in operation, controls the generation of the excitation signal for performing EIS based on an EIS instruction determined by a balancing control device.

In this manner, the charge monitoring device allows the battery management system to perform EIS measurements by means of the charge transfer device, thus abolishing the need of connecting external hardware to the HV battery for that purpose.

According to an eighth aspect, the charge transferring device comprises a bidirectional voltage converter, and a primary side of the bidirectional voltage converter is electrically connected to the battery module connected to the charge monitoring device and a secondary side of the bidirectional voltage converter is electrically connected to the adjacent battery module. Notably, the bidirectional converter, which may be a bidirectional DC/DC converter, may represent the high voltage (or high potential) component of the charge transferring device, which respectively operates on the electric potential of the two connected battery modules. Furthermore, the bidirectional (DC/DC) converter may be functionally isolated between two connected battery modules, which for example may mean that each of the two sides of the bidirectional (DC/DC) converter may be controlled by respectively one of the battery monitoring devices communicatively coupled to the charge transferring device.

According to a ninth aspect, there is provided a charge monitoring system comprising a plurality of charge monitoring devices (according to one or more of the above described aspects), wherein respectively one of the plurality of charge monitoring devices, in operation, monitors one battery module among a plurality of battery modules, which are electrically connected in series to form a high voltage battery, and comprising a plurality of charge transferring devices, wherein respectively one of the plurality of charge transferring devices is electrically connected between two adjacent battery modules of the high voltage battery, so as to enable charge transfer between the battery modules connected to the two adjacent charge monitoring devices.

According to a tenth aspect, there is provided a charge monitoring method, performed by a balancing control device, for balancing charge states of a plurality of battery cells being arranged in a plurality of battery modules, wherein the plurality of battery modules are electrically connected in series to form a high voltage battery, the method comprising: (i) acquiring cell charge states of the plurality of battery cells from a plurality of charge monitoring devices, which are electrically connected to the plurality of battery modules; (ii) determining module charge states of the plurality of battery modules from the acquired charge states; (iii) determining, a balancing target battery module among the plurality of battery modules based on the cell charge states; and (iv) transmitting a balancing instruction to a balancing target charge monitoring device, which is electrically connected to the target battery module. The balancing instruction comprises cell balancing information instructing the balancing target charge monitoring device to balance the charge states of the plurality of battery cells arranged in the target battery module, and module balancing information instructing the balancing target charge monitoring device to transfer charge between the balancing target battery module and an adjacent battery module.

In this manner, the charge balancing control device (e.g. implemented in a main controller of a BMS or in a vehicle ECU) can communicate the balancing instruction to the balancing target charge monitoring device(s). The reception of the balancing instruction urges the balancing target charge monitoring device(s) not only to balance the charge states of the battery cells arranged within the associated battery modules on a cell level, if instructed, but also to balance the battery module charge states of the battery modules on a battery module level. Accordingly, the charge balancing method facilitates improving the charge balancing efficiency for a HV battery, which comprises a plurality of battery modules, since it facilitates the balancing of the battery module charge states on a battery module level.

According to an eleventh aspect, the balancing instruction comprises one or more of (i) identification information indicating a balancing target charge monitoring device, (ii) module balancing duration information indicating a duration of the charge transfer, (iii) target module charge state information indicating a target module charge state for the battery module; and (iv) module balancing direction information indicating a direction of the charge transfer.

In this manner, the balancing control device is enabled to supervise (as a master controller) the balancing of the battery module charge states of the battery modules of a HV battery on a battery module level, in addition to supervising the balancing of the battery cell charge states, which is individually performed by the charge monitoring devices of the battery modules.

According to a twelfth aspect, the balancing instruction comprises one or more of (i) cell balancing information indicating at least one balancing target battery cell, (ii) cell balancing duration information indicating one or more cell balancing duration(s) for balancing the at least one balancing target battery cell, and (iii) target cell charge state information indicating a target cell charge state for the at least one balancing target battery cell.

In this manner, the balancing control device is enabled to supervise (as a master controller) the balancing of the charge states of the battery modules of a HV battery on a battery module level, in addition to supervising the battery cell charge states, which is individually performed by the charge monitoring devices of the battery modules.

According to a thirteenth aspect, the method further comprises determining an electrochemical impedance spectroscopy, EIS, target battery module among the plurality of battery modules, and transmitting an EIS instruction to an EIS target charge monitoring device being electrically connected to the EIS target battery module, so as to urge the EIS target charge monitoring device (i) to control a charge transferring device associated with the EIS target battery module to generate an EIS excitation signal, and (ii) to detect, for the plurality of battery cells arrangend in the EIS target battery module, a response to the EIS excitation signal.

In this manner, the method may allow a battery management system to perform EIS measurements by means of the charge transfer device, thus abolishing the need of connecting external hardware to the HV battery for that purpose.

According to a fourteenth aspect, the determining of a balancing target battery module comprises the determining of a plurality of balancing target battery modules, and the transmitting of the balancing instruction comprises transmitting the balancing instruction to each balancing target charge monitoring device, which is electrically connected to at least one of the plurality of target battery modules.

In this manner, the method allows a battery management system to synchronously transfer energy between several battery modules of the HV battery, thereby decreasing the total module balancing time. In particular, by transferring charge between a plurality of adjacent battery modules at a same time, charge transfer is possible between all battery modules of the HV battery, which are connected to the network of charge transferring devices, not only between neighboring battery module devices.

According to a fifteenth aspect, the balancing instruction comprises, for each balancing target charge monitoring device, one or more of (i) identification information indicating the balancing target charge monitoring device, (ii) module balancing duration information indicating a duration of the charge transfer, (iii) target module charge state information indicating a target module charge state for the battery module; and (iv) module balancing direction information indicating a direction of the charge transfer.

In this manner, the balancing control device is enabled to supervise (as a master controller) the balancing of the battery module charge states of battery modules of a HV battery on a battery module level, while addressing the plurality of balancing target charge monitoring devices with individual charge transferring parameters, to individually control the charge transfer of each balancing target battery module.

In the following, the invention is described in more detail with reference to the attached figures and drawings. Similar or corresponding details in the figures are marked with the same reference numerals.

The accompanying drawings are incorporated into the specification and form a part of the specification to illustrate several implementations of the present invention. These drawings, together with the description, serve to explain the principles of the invention. The drawings are merely for the purpose of illustrating the preferred and alternative examples of how the invention can be made and used, and are not to be construed as limiting the invention to only the illustrated and described implementations. Furthermore, several aspects of the implementations may form-individually or in different combinations-solutions according to the present invention. The following described implementations can thus be considered either alone or in an arbitrary combination thereof. The described implementations are merely possible configurations, and it must be borne in mind that the individual features, as described above, can be provided independently of one another, or can be omitted altogether while implementing this invention. Further features and advantages will become apparent from the following, more particular description of the various implementations of the invention, as illustrated in the accompanying drawings in which like references refer to like elements, and wherein:
- **Fig. 1**: shows a schematic block diagram of an exemplary power supply system, which benefits from the ideas of the present disclosure;
- **Fig. 2**: is a flow chart illustrating steps performed by a charge monitoring device and a balancing control device in an exemplary balancing control method;
- **Fig. 3**: is a flow chart illustrating steps performed by a balancing control device in the exemplary balancing control method;
- **Fig. 4**: is a flow chart illustrating steps performed by a balancing target charge monitoring device in the exemplary balancing control method;
- **Fig. 5**: shows a schematic block diagram illustrating the interaction between an exemplary charge monitoring device and an associated charge transferring device;
- **Fig. 6**: shows a schematic block diagram of an exemplary implementation of the charge monitoring device;
- **Fig. 7**: shows a schematic block diagram of another exemplary implementation of the charge monitoring device;
- **Fig. 8**: illustrates a first example of a charge balancing procedure according to the exemplary balancing control method;
- **Fig. 9**: illustrates a second example of a charge balancing procedure according to the exemplary balancing control method;
- **Fig.10**: shows a schematic block diagram of a second exemplary charge monitoring device and an associated charge transferring device.

Notably, throughout this document, the term "terminal" is meant to describe a point at which a conductor from an electric device, an electric circuit or an electric component ends, and where a point is provided for electrically connecting an external electric device, an external electric circuit or an external electric component to this conductor. The term "node" or "connection node" shall describe a point where the terminals of one or more circuit components meet or may refer to the entire wire, which conductively couples the terminals of one or more electric circuit components.

Further, the terms "electrically connected" and "conductively coupled" describe the establishing of an electrical connection between at least two electric devices, electric components or electric conductors, which allows the flow of electric current. Hereby the electrical connection should not be restricted to a direct coupling of the terminals of the at least two electric devices, electric components or electric conductors, but other electric devices, electric components or electrical conductors may be coupled in between.

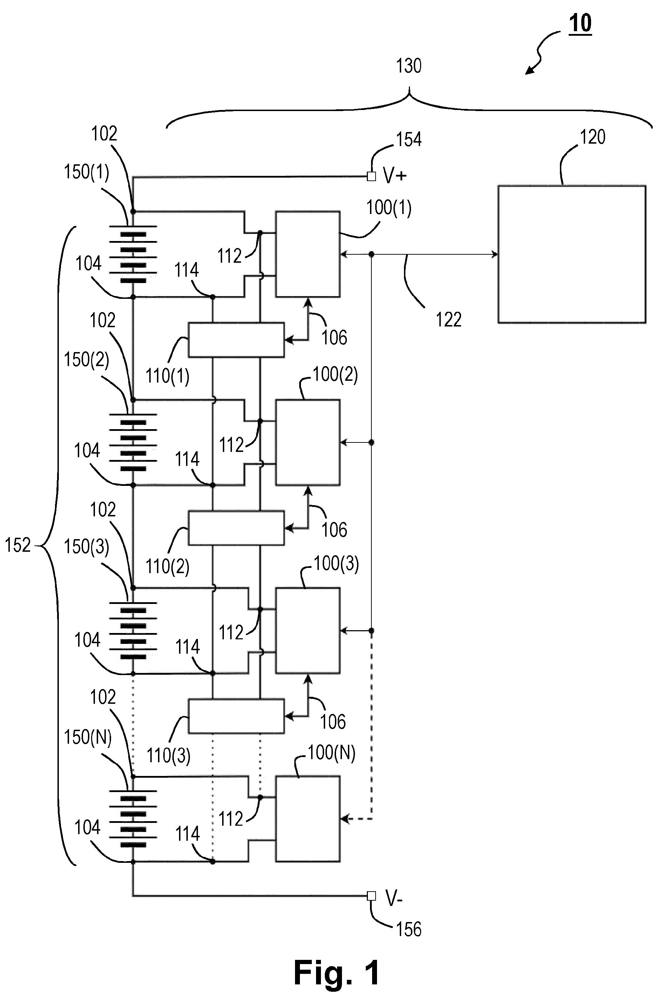

The present disclosure will now be explained in more detail with reference to the Figures and firstly referring to Fig. 1. Fig. 1 is a schematic circuit diagram of an exemplary power supply system 10 that can benefit from the ideas of the present disclosure. In some exemplary application scenarios, the power supply system 10 may be implemented in an electric vehicle as a power supply for electric loads like an electric motor, which are supplied at a predetermined high voltage, and for electric loads like an air conditioning system or a lightning system, which are supplied at a predetermined low voltage. In other exemplary application scenarios, the power supply system 10 may be implemented in a stationary electrical energy storage (EES) system, where a large amount of power is stored and which are comprised of a large number of battery cells, like in a power grid or an uninterruptible power supply (system).

As illustrated in Fig. 1, the power supply system 10 is a module based energy storage system, which includes a plurality (at least two) battery modules (or "power storage modules") 150. The battery modules 150 are connected in series at connection nodes 102,104, so as to form a high voltage battery 152. To distinguish each of the number of N of battery modules 150, the numbers are specified in Fig. 1 as battery module 150(1), 150(2), ..., 150(N), from the high potential side (V+) at the top of the figure to the low potential side (V-) at the bottom of the figure. Accordingly, the battery modules 150 function as subunits of the HV battery 152, thereby providing module voltages, which sum up to the predetermined high voltage output of the HV battery 152, which can be conductively coupled to a high voltage bus at high voltage output terminals 154, 156. In other words, the value of the module voltage supplied by each of the battery modules 150 can be obtained by dividing with N the predetermined high voltage value output from the HV battery 152, wherein N is the number of battery modules 150 in the power supply system 10. Especially, N may be an integer number larger than 1. For example, when the battery 152 outputs a predetermined high voltage value of 800 V, and N = 20, battery modules 150 share and output a module voltage of (800 V / 20) = 40 V.

Each of the battery modules 150 comprises at least one battery cell, for example a battery cell having a lithium ion electrochemistry (e.g. LFP or NMC). Hereby, a battery cell may be a physical battery cell or may comprise several physical battery cells electrically connected in parallel on a cell level. In some examples, 5 to 24 battery cells each having a cell voltage in the range of 3.3 V to 4.3 V, may be electrically connected in series to form the battery modules 150. Accordingly, in those examples, the battery modules 150 respectively may provide a module voltage in the range between around15 V to 100 V, or in particular between 30 V and 60 V. However, also a different number of battery cells with a different cell voltage may be electrically connected to form the battery modules 150. Especially a battery module 150 may also be formed of a single battery cell.

Each of the battery modules 150 is respectively associated with a charge monitoring device (also "cell monitoring device" or "charge monitoring board" - "CMB") 100, which is configured to monitor the cell charge states of the battery cells of the corresponding battery module 150. To distinguish each of the number of N charge monitoring devices 100, the numbers are specified in Fig. 1 as charge monitoring device 100(1), 100(2), ..., 100(N). Hereby, the charge monitoring device 100(i) is respectively electrically connected at the high potential (CMB) connection nodes 102 and the low potential (CMB) connection nodes 104 to the battery module 150(i) (and thus "assigned to", "affiliated to" or "associated with" the battery module 150(i)).

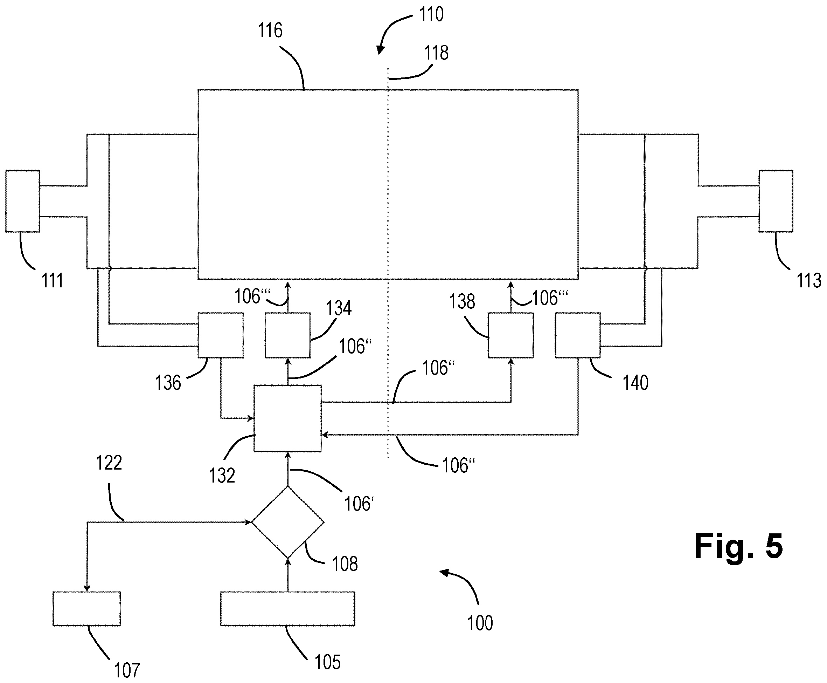

The charge monitoring devices 100 respectively comprise cell monitoring circuitry 108 (or "charge monitoring circuitry", see e.g. Fig. 5), which is configured to detect cell charge states, like a voltage or a state of charge of the battery cells arranged in the associated (or "assigned") battery module 150 (i.e. the battery module 150(i) electrically connected to the charge monitoring device 100(i)). In some implementations, the cell monitoring circuitry 108 comprises detection circuitry, e.g. in form of one or more analog-to-digital converters (ADCs), which is configured to measure the states of the battery cells of the assigned battery module 150, for example by detecting the cell voltages of those battery cells, by detecting the battery module current or battery cell current of those battery cells and/or by detecting the temperature(s) of all or at least a part of those battery cells. Optionally, the cell monitoring circuitry 108 may also be electrically connected to suitable external or internal sensors for detecting other battery module parameters, such as module temperature, module humidity, module pressure, module gas concentration or module fluid level.

In addition, the cell monitoring circuitry 108 is configured to balance the charge states of the battery cells arranged in the associated battery module 150 (i.e. the battery module 150(i) electrically connected to the charge monitoring device 100(i)), for example upon receiving a balancing instruction (or "balancing request", "charge transfer instruction" or "charge transfer request") from the battery management system of the power supply system 10. In some implementations, the cell monitoring circuit comprises balancing switches, for example in form of semiconductor switches, which are closed (and opened) to discharge selected battery cells of the associated battery module 150 in order to equalize the cell charge states (e.g. the cell voltage or cell state of charge) of all battery cells of the associated battery module 150 at a target cell charge state. In such implementations, the balancing of the battery cells may be performed by passive balancing, e.g. by discharging of balancing target battery cells through a resistive load. In other implementations the balancing of the battery cells may be performed by active balancing, e.g. by transferring charge from balancing target battery cells to other battery cells of the same battery module.

In some implementations, the cell monitoring circuitry 108 may, depending on number of battery cells arranged in the associated battery module, comprise one or more dedicated cell monitoring integrated circuits ("cell monitoring ICs"), which may be soldered on a same component carrier, like a printed circuit board (PCB). Each of the one or more cell monitoring ICs may, for example, configured to perform the above described detection and balancing functionalities for respectively between 6 and 25 battery cells, although higher numbers of battery cells per cell monitoring IC are possible depending on the application scenario.

Turning back to Fig. 1, the power supply system 10 also comprises a plurality of (at least one) charge transferring devices 110, which may be also signified as "active module balancing (AMB) devices". The charge transferring devices 110 are configured to transfer charge between the battery modules 150, to which they are connected at the high potential (AMB) connection nodes 112 and the low potential (AMB) connection nodes 114. To distinguish each of the number of M charge transferring devices 110, the numbers are specified in Fig. 1 as charge transferring devices 110(1), 110(2), ..., 110(M). Hereby, the charge transferring devices 110(i) is respectively electrically connected at the high potential (AMB) connection nodes 112 and the low potential (AMB) connection nodes 104 to the battery module 150(i) and to the battery module 150(i+1). In other words, each of the charge transferring devices 110 is respectively electrically connected between two adjacent (or "neighboring") battery modules 150 of the high voltage battery 152, so as to enable charge transfer between said two connected battery modules 150. Accordingly, the number M of the charge transferring devices 110 in the power supply system 10 is advantageously equal to N-1, wherein N is the number of battery modules 150 or the number of charge monitoring devices 100. For example, if the power supply system 10 has 5 battery modules 150 (and five associated charge monitoring devices 100), the power supply system 10 would have four charge transferring devices 110, or if the power supply system 10 has two battery modules 150 (and two associated charge monitoring devices 100), the power supply system 10 would have one charge transferring device 110.

Each of the charge monitoring devices 100 is communicatively coupled to respectively one of the charge transferring devices 110 through (AMB) communication channels 106 (as "first communication channels" of the power supply system 100). Hereby, for example the charge monitoring device 100(i) is communicatively coupled to the charge transferring devices 110(i), which is electrically connected between the battery module 150(i) associated with the charge monitoring device 100(i) and the adjacent battery module 150(i+1). Accordingly, the charge transferring device 110(i) is "assigned to", "affiliated to" or "associated with" the charge monitoring device 100(i). For example, as illustrated in Fig. 1. in the exemplary power supply system 10, the charge monitoring device 100(1) is communicatively coupled to the charge transferring devices 110(1), the charge monitoring device 100(2) is communicatively coupled to the charge transferring devices 110(2), the charge monitoring device 100(3) is communicatively coupled to the charge transferring devices 110(3), and the charge monitoring device 100(N-1) is communicatively coupled to the charge transferring devices 110(M). This means that in the whole power supply system 10, one of the charge monitoring devices 100, in this example the charge monitoring device 100(N) is not communicatively coupled to a charge transferring devices 110.

The (AMB) communication channel 106 is a communication channel, which enables the individual charge transferring devices 110(i) to receive control signals from the associated charge monitoring device 100(i), and thus enables the charge monitoring device 100(i) to control the charge transfer between the battery module 150(i) connected to the charge monitoring device 100(i) and the adjacent battery module 150(i+1).

In some exemplary implementations, the (AMB) communication channels 106 may be provided through wired connections, e.g. in form of isolated communication lines or in form of non-isolated communication lines. Information may be transmitted through the (AMB) communication channel 106 according to one or more communication protocol, like a CAN protocol (like CAN, CANFD or CAN Extended), a SPI (Serial Port Interface) or isoSPI (isolated Serial Port Interface) protocol, or an Ethernet protocol. In other exemplary implementations, the (AMB) communication channel 106 may be a wireless communication channel, where communication may performed according to a Bluetooth (registered trademark) standard, especially a Bluetooth low energy standard, a WLAN ("Wireless Local Area Network") standard, in particular through a Wi-Fi ("Wireless Fidelity") standard, a similar wireless communication standard, or a combination of some of the mentioned wireless standards.

In the exemplary power supply system 10 illustrated in Fig. 1, the charge monitoring devices 100 and the charge transferring devices 110 are provided as dedicated (separated) electronic components, which are respectively communicatively coupled over the (AMB) communication channel 106. However - as will become apparent later - it should be noted that some of the circuits of the charge transferring devices 110, or even the functionalities of the charge transferring devices 110 as a whole may be integrated into the associated charge monitoring devices 100, so as to enhance the functional integration of the power supply system 10, and especially of the charge monitoring devices 100.

As further illustrated in Fig. 1, the power supply system 10 comprises a balancing control device 120, which is communicatively coupled to the plurality of charge monitoring devices 100 through the (CMB) communication channel 122 (as "second communication channel" of the power supply system 100). In some implementations, the balancing control device 120 may be functionally integrated into a main controller of the battery management system of the power supply system 10 or of a vehicle ECU. In such implementations, the balancing control device 120 functions as an external main controller, which is separately arranged from the charge monitoring devices 100 in the power supply system 10. In other implementations, the balancing control device 120 may be functionally integrated into one of the charge monitoring devices 100, which therefore would function as a "primary charge monitoring device" of the power supply system 10, while the remaining charge monitoring devices 100 would function as "secondary charge monitoring devices", which receive balancing instructions from the primary charge monitoring device. In other implementations, the functionalities of the balancing control device 120 may be distributed among more than one of the charge monitoring devices 100.

In some exemplary implementations, the (CMB) communication channel 122 may be provided through a wired connection, e.g. in form of one or more isolated communication lines or in form of one or more non-isolated communication lines. Information may be transmitted through the (CMB) communication channel 122 according to one or more communication protocol, like a CAN protocol (like CAN, CANFD or CAN Extended), a SPI (Serial Port Interface) or isoSPI (isolated Serial Port Interface) protocol, or an Ethernet protocol. In other exemplary implementations, the (CMB) communication channels 122 may be a wireless communication channel, where communication may performed according to a Bluetooth (registered trademark) standard, especially a Bluetooth low energy standard, a WLAN ("Wireless Local Area Network") standard, in particular through a Wi-Fi ("Wireless Fidelity") standard, a similar wireless communication standard, or a combination of some of the mentioned wireless standards.

In some implementations, the charge monitoring devices 100 may be communicatively coupled to the balancing control device 120 in a daisy chain topology by the communication channel 122, e.g. in the form of a single communication line. In other implementations, the charge monitoring devices 100 may be communicatively coupled to the balancing control device 120 in a bus topology by individual communication channels, e.g. in form of isolated communication lines individually connected between the balancing control device 120 and each of the charge monitoring devices 100.

The charge monitoring devices 100, the charge transferring devices 110, and the balancing control device 120 (together with the (AMB) communication channels 106 and the (CMB) communication channel 122) form a charge monitoring system 130, which enables to efficiently balance the charge states between the battery modules 150 on a module level (i.e. between the battery modules 150) and on a cell level (i.e. between the battery cells arranged within a battery module 150).

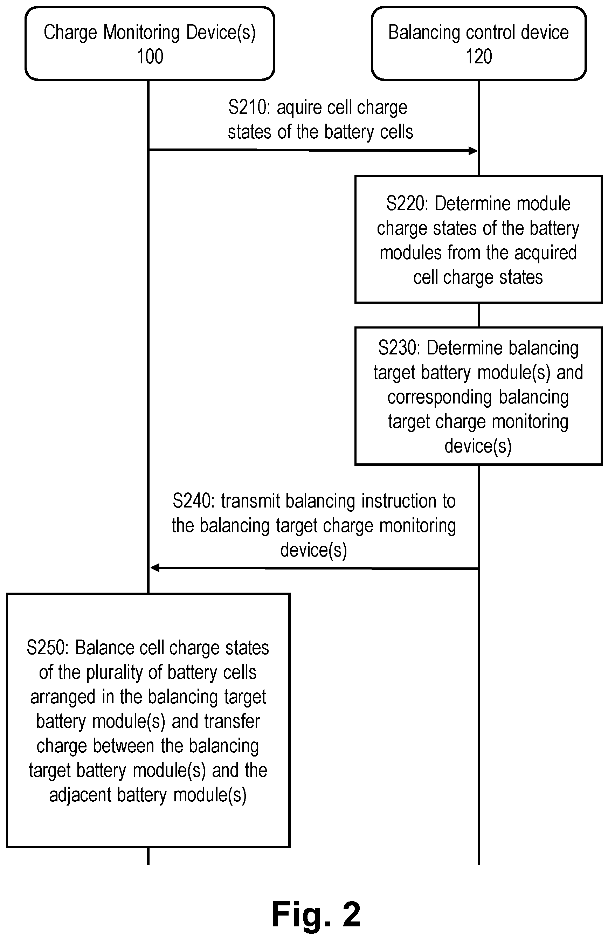

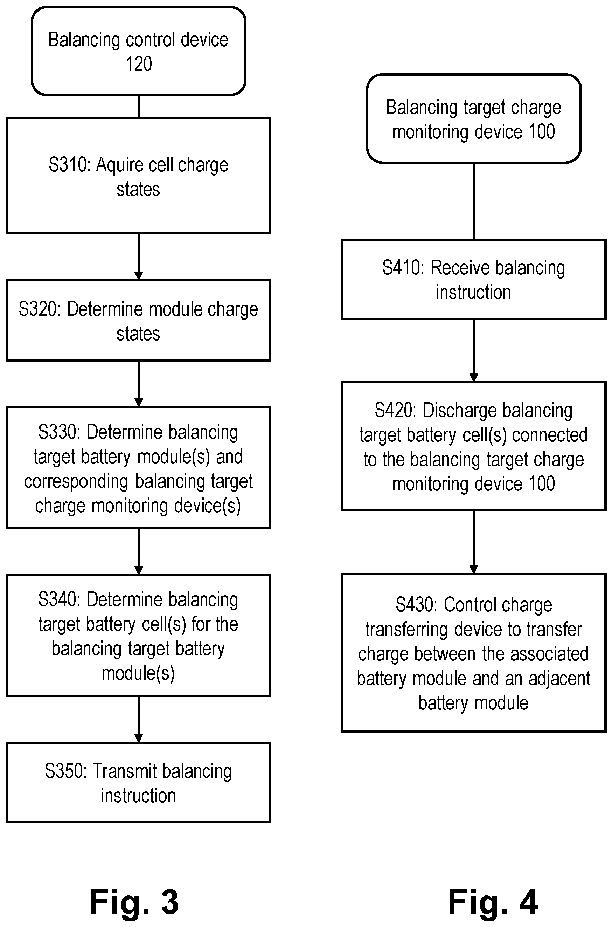

Fig. 2 is a flow chart illustrating steps performed by the charge monitoring devices 100 and the balancing control device 120 in an exemplary balancing control method performed in the power supply system 10, and more particularly in the charge monitoring system 130. Fig. 3 is a flow chart illustrating the steps performed by the balancing control device 120 in the exemplary balancing control method. Fig. 4 is a flow chart illustrating steps performed by one of the charge monitoring devices 100, which is determined as a balancing target charge monitoring device 100 in the exemplary balancing control method.

In step S210 (and in step S310), the balancing control device 120 acquires, for each battery module 150 or for a part of the battery modules 150, the cell charge states of the battery cells arranged in the corresponding battery modules 150 from the charge monitoring devices 100 associated with the corresponding battery modules 150. In some implementation examples, the charge monitoring devices 100 may, for example, acquire the cell voltage of the battery cells and/or the cell current of the battery cells as detection data from the charge monitoring devices 100 and may determine the state of charge of the battery cells as cell charge states from this detection data. In other implementations, the charge monitoring devices 100 may, for example, acquire the cell voltage of the battery cells and may use the cell voltage of the battery cells as cell charge states.

In step S220 (and in step S320), the balancing control device 120 determines module charge states of the plurality of battery modules 150 based on the acquired cell charge states. In some implementations, the balancing control device 120 may determine, for each battery module 150 or for a part of the battery modules 150, an average value of the cell charge state of the battery cells arranged in the corresponding battery module 150 as the module charge state of the corresponding battery module 150. In other implementations, the balancing control device 120 may determine, for each battery module 150 or for a part of the battery modules 150, a maximum value or a minimum value of the cell charge state of the battery cells arranged in the corresponding battery module 150 as the module charge state of the corresponding battery module 150.

In step S230 (and in step S330), the balancing control device 120 determines one or more balancing target battery modules 150 based on the determined module charge states. For example, the balancing control device 120 selects one or more of the battery module(s) 150 having the highest module charge state(s) as the balancing target battery module(s) 150. Further, the balancing control device 120 determines the one or more charge monitoring device(s) 100, which are associated with the balancing target battery module(s) 150 as balancing target charge monitoring device(s) 100.

In addition, the balancing control device 120 may determine in step S230, for each balancing target battery module(s) 150 or for a part of the balancing target battery module(s) 150, one or more balancing target battery cells(s) based on the acquired cell charge states (see e.g. step S340 of Fig. 3). For example, the balancing control device 120 selects, for each balancing target battery module(s) 150 or for a part of the balancing target battery module(s) 150, one or more of the battery cell(s) 150 having the highest cell charge state(s) as the balancing target battery module(s) 150. Of course, the balancing control device 120 may optionally also determine, for the remaining battery modules 150, which are not selected as balancing target battery module(s) 150, one or more balancing target battery cells(s) based on the acquired cell charge states.

In step S240 (and in step S350), the balancing control device 120 generates and transmits a balancing instruction to the determined balancing target charge monitoring device(s) 100 through the communication channel 122.

The balancing instruction may comprise one or more of the following information: (i) identification information indicating a balancing target charge monitoring device 100, (ii) module balancing duration information indicating a duration of the charge transfer, (iii) target module charge state information indicating a target module charge state for the battery module; and (iv) module balancing direction information indicating a direction of the charge transfer.

The identification information may, for example, be an identification number (e.g. a serial number) of a battery module 150 determined as balancing target battery module 150 or an identification number of a charge monitoring device 100 associated with a battery module 150 determined as balancing target battery module 150. The duration of the charge transfer may, for example, be determined (by the balancing control device 120) based on a difference between the module charge state of the balancing target battery module 150 and the battery module 150 adjacent to the balancing target battery module 150 as the duration of charge transfer, which is required for equalizing the module charge states between the two battery modules. The target module charge state may, for example, be determined (by the balancing control device 120) based on a difference between the module charge state of the balancing target battery module 150 and the battery module 150 adjacent to the balancing target battery module 150 or may be determined as an average of the module charge states of all the battery modules 150, which form the HV battery 152. The direction of charge transfer may, for example, indicate that charge is transferred from the battery module 150(i) associated with the charge monitoring device 100(i), which receives the balancing instruction, to the adjacent battery module 150 (i+1), or indicate that charge is transferred from the adjacent battery module 150 (i+1) to the battery module 150(i) associated with the charge monitoring device 100(i).

If balancing target battery cells are determined for the balancing target battery modules 150 (or for a part of the balancing target battery modules 150), the balancing instruction may additionally comprises one or more of the following information: (i) cell balancing information indicating at least one balancing target battery cell of the balancing target battery module 150, (ii) cell balancing duration information indicating one or more cell balancing duration(s) for balancing the at least one balancing target battery cell, and (iii) target cell charge state information indicating a target cell charge state for the at least one balancing target battery cell.

The identification information may, for example, be an identification number (e.g. a serial number) of a battery cell determined as balancing target battery cell. The cell balancing duration may, for example, be determined (by the balancing control device 120) based on a difference between the cell charge state of the balancing target battery cell(s) and a lowest cell charge state among the cell charge states of battery cells arranged in the balancing target battery module 150 as the duration of discharging, which is required for equalizing the cell charge states between all the battery cells arranged in the balancing target battery module 150. The target cell charge state may, for example, be determined (by the balancing control device 120) as a lowest cell charge state among the cell charge states of battery cells arranged in the balancing target battery module 150.

In step S240 (and in step S410), the balancing target charge monitoring device(s) 100 receive the balancing instruction from the balancing control device 120.

In step S250 (and in step S420), the balancing target charge monitoring device(s) 100 control the operation of the cell balancing circuitry based on the balancing instruction, so as to balance the cell charge states of the plurality of battery cells arranged in the balancing target battery module(s) 150 (if balancing target battery cells are determined for the balancing target battery module(s) 150). In some implementations, where the balancing of the battery cells is performed by passive balancing, the balancing target charge monitoring device(s) 100 may discharge the balancing target battery cell(s) through a resistive load, for example for a cell balancing duration indicated in the balancing instruction or until a target cell charge state indicated in the balancing instruction is reached. In other implementations, where the balancing of the battery cells may be achieved by active balancing, the balancing target charge monitoring device(s) 100 may transfer charge from the balancing target battery cell(s) to other battery cells of the balancing target battery module 150, for example for a cell balancing duration indicated in the balancing instruction or until a target cell charge state indicated in the balancing instruction is reached.

In step S250 (and in step S430), the balancing target charge monitoring device(s) 100 control the charge transfer between the balancing target battery module(s) 150 and the adjacent battery module(s) based on the balancing instruction, so as to transfer charge between the balancing target battery module(s) and the adjacent battery module(s). More specifically in the charge monitoring system 130 illustrated in Fig. 1, the balancing target charge monitoring device(s) 100(i) control the associated charge transferring devices 110(i), to transfer charge between the balancing target battery module(s) 150(i) and the adjacent battery module(s) 150(i+1). For example, the balancing target charge monitoring device(s) 100(i) may urge the associated charge transferring devices 110(i) to transfer charge from the balancing target battery module(s) 150(i) and the adjacent battery module(s) 150(i+1) in the direction of charge transfer indicated in the balancing instruction. The charge transfer may be performed, for example, for a module balancing duration indicated in the balancing instruction or until a target module charge state indicated in the balancing instruction is reached.

Notably, the above described charge balancing method may not only be used to balance the charges of the plurality of battery modules 150 of the HV battery 152, but also to completely discharge a dedicated one of the battery modules 150, if the dedicated battery module 150 needs to be replaced. In such case, the balancing control device 120 determines the dedicated battery module 150 as a target replacement battery module 150 and determines charge transfer parameters, which enable a complete discharging of the target replacement battery module 150. The balancing control device 120 generates a corresponding charge transfer instruction including the charge transfer parameters and transmits the charge transfer instruction to the replacement target charge monitoring device 100 being associated with the target replacement battery module 150. In response to receiving the charge transfer instruction, the replacement target charge monitoring device 100 controls the associated charge transferring devices 110 to transfer the whole charge of the target replacement battery module 150 to the adjacent battery module 150, so as to completely discharge the target replacement battery module 150.

Fig. 5 shows a schematic block diagram illustrating the interaction between one of the charge monitoring devices 100 and its associated charge transferring device 110 in the charge monitoring system 130. The charge monitoring device comprises the cell monitoring circuitry 108, a (CMB) cell connector 105 and a (CMB) communication interface. The (CMB) cell connector 105 is configured to connect the charge monitoring device 100 to the associated battery module 150, which is monitored by the charge monitoring device 100, for example at the (CMB) connection nodes 102, 104. More specifically, the (CMB) cell connector 105 is configured to connect the cell monitoring circuitry 108 of the charge monitoring device 100 to the battery cells of the monitored battery module 150 to enable the cell monitoring circuitry 108 the detection of the cell charge states and the balancing of the cell charge states of the corresponding battery cells. The (CMB) communication interface 107 is configured to communicatively couple the charge monitoring device 100 to the balancing control device 120 of the charge monitoring system 130 over the (CMB) Communication channel 122. More specifically, the (CMB) communication interface 107 is configured to communicatively couple the cell monitoring circuitry 108 of the charge monitoring device 100 to the balancing control device 120, so as to enable the cell monitoring circuitry 108 to transmit information on the detected cell charge states to the balancing control device 120 and to receive balancing instructions from the balancing control device 120 (see Figs. 2 to 4).

In some implementations, where the balancing control device 120 is functionally integrated into one of the charge monitoring devices 100 (to function as a function as a "primary charge monitoring device 100"), the (CMB) communication interface 107 is configured to communicatively couple the primary charge monitoring device 100 to the remaining charge monitoring devices 100 ("secondary charge monitoring devices 100") of the charge monitoring system 130 over the (CMB) Communication channel 122. More specifically, in such implementations the (CMB) communication interface 107 is configured to communicatively couple the cell monitoring circuitry 108 of the primary charge monitoring device 100 to the cell monitoring circuitry 108 of the primary charge monitoring device 100, so as to enable the cell monitoring circuitry 108 of the primary charge monitoring device 100 to receive information on the detected cell charge states from the remaining charge monitoring devices 100 and to transmit balancing instructions to the remaining charge monitoring devices 100.

The charge transferring device 110 comprises (AMB) module connectors 111, 113 and charge transfer circuitry 116. A first (AMB) module connector 111 is configured to electrically connect a primary side of the charge transferring device 110 to the battery module 150 (or 150(i)) monitored by (or associated with) the charge monitoring device 100, for example at the (AMB) connection nodes 112, 114 of the monitored battery module 150. A second (AMB) module connector 113 is configured to electrically connect a secondary side of the charge transferring device 110 to a battery module 150 (or 150(i+1)) adjacent to the monitored battery module 150 (or 150(i)), for example at the (AMB) connection nodes 112, 114 of the adjacent battery module 150 (or 150(i+1)).

The charge transfer circuitry 116 is configured to transfer charge between the primary side of the charge transferring device 110 and the secondary side of the charge transferring device 110, i.e. between the monitored battery module 150 and the adjacent battery module 150. For example, the charge transfer circuitry 116 may be a voltage converter circuit, in particular a bidirectional voltage converter circuit, and more specifically a bidirectional DC/DC voltage converter circuit. This configuration of the charge transfer circuitry 116 allows to transfer charge in any direction between two adjacent battery modules 150, so that as a consequence charge can be freely transferred between all the battery modules 150 that are electrically connected by the plurality of charge transferring device 110 in the charge monitoring system 130. Because the charge transfer circuitry 116 is electrically connected to two different battery modules 150, which have different voltage potentials, the charge transfer circuitry 116 has an isolation barrier 118, which galvanically separates the primary side and the secondary side of the charge transferring device 110.

In a first exemplary implementation of the charge monitoring system 130, the charge transferring device 110 comprises AMB control circuitry 132, which may control the operation of the charge transfer circuitry 116. In the first exemplary implementation, the cell monitoring circuitry 108 of the charge monitoring device 100 is communicatively coupled to the AMB control circuitry 132 of the associated charge transferring device 110 through the (AMB) communication channel 106', so as to enable the charge monitoring device 100 to control the operation of the associated charge transferring device 110. In particular, the AMB control circuitry 132 is configured to generate switching control signals for controlling the operation (in particular the switching states) of the charge transfer circuitry 116, thereby controlling the charge transfer between the monitored battery module and the adjacent battery module. In the first exemplary implementation of the charge monitoring system 130, the AMB control circuitry 132 generate switching control signals based on control instructions received from the cell monitoring circuitry 108 through the (AMB) communication channel 106'. The cell monitoring circuitry 108 in turn generates the control instructions based on the balancing instructions received from the balancing control device 120.

In addition, in the first exemplary implementation of the charge monitoring system 130, the charge transferring device 110 comprises primary side (AMB) driving circuitry 134 and secondary side (AMB) driving circuitry 138. The primary side (AMB) driving circuitry 134 is configured to open and close switch devices arranged on the primary side of the charge transfer circuitry 116 based on the switching control signals received from the AMB control circuitry 132. For example, the primary side (AMB) driving circuitry 134 may supply PWM modulated voltage signals to the switch devices arranged on the primary side of the charge transfer circuitry 116 to regulate the charge transfer between the primary side and the secondary side of the charge transfer circuitry 116. The secondary side (AMB) driving circuitry 138 is configured to open and close switch devices arranged on the secondary side of the charge transfer circuitry 116 based on the switching control signals received from the AMB control circuitry 132. For example, the secondary side (AMB) driving circuitry 138 may supply PWM modulated voltage signals to the switch devices arranged on the secondary side of the charge transfer circuitry 116 to regulate the charge transfer between the primary side and the secondary side of the charge transfer circuitry 116.

As also illustrated in Fig. 5, in the first exemplary implementation of the charge monitoring system 130, the charge transferring device 110 may comprise additional feedback circuitry, namely primary side feedback circuitry 136 and secondary side feedback circuitry 140. The primary side feedback circuitry 136 and the secondary side feedback circuitry 140 may include voltage detection circuitry, which is configured to respectively detect a voltage applied to the primary side or secondary side of the charge transfer circuitry 116 (i.e. the primary side or the secondary side of the charge transferring device 110), and/or may include current detection circuitry, which is configured to respectively detect a current flowing through the primary side or secondary side of the charge transfer circuitry 116 (i.e. the primary side or secondary side of the charge transferring device 110). Based on the feedback, which may indicate the actual voltage applied to the primary side of the charge transfer circuitry 116 and/or the actual current flowing through the primary side of the charge transfer circuitry 116, the AMB control circuitry 132 adapts the switching control signals for the primary side (AMB) driving circuitry 134 and secondary side (AMB) driving circuitry 138. Or stated in different words, the AMB control circuitry 132 may generate switching control signals not only based on the control instructions received from the cell monitoring circuitry 108, but also based on the feedback received by the primary side feedback circuitry 136 and the secondary side feedback circuitry 140.

The secondary side of the charge transfer circuitry 116 is electrically connected to the adjacent battery module 150 and thus on a different electric potential than the primary side of the charge transfer circuitry 116. For this reason, the AMB control circuitry 132 communicates with the secondary side (AMB) driving circuitry 138 over a first isolation barrier 142, which for example comprises an isolated buck (voltage) converter, and communicates with the secondary side feedback circuitry 140 over a second isolation barrier 144, which for example comprises a digital isolator.

The first exemplary implementation of the charge monitoring system 130 has the advantage that the configuration of the charge monitoring device 100 can be kept simple, while at the same time the charge monitoring device 100 is enabled to balance the charges of two adjacent battery modules 150 by using the charge transferring device 110.

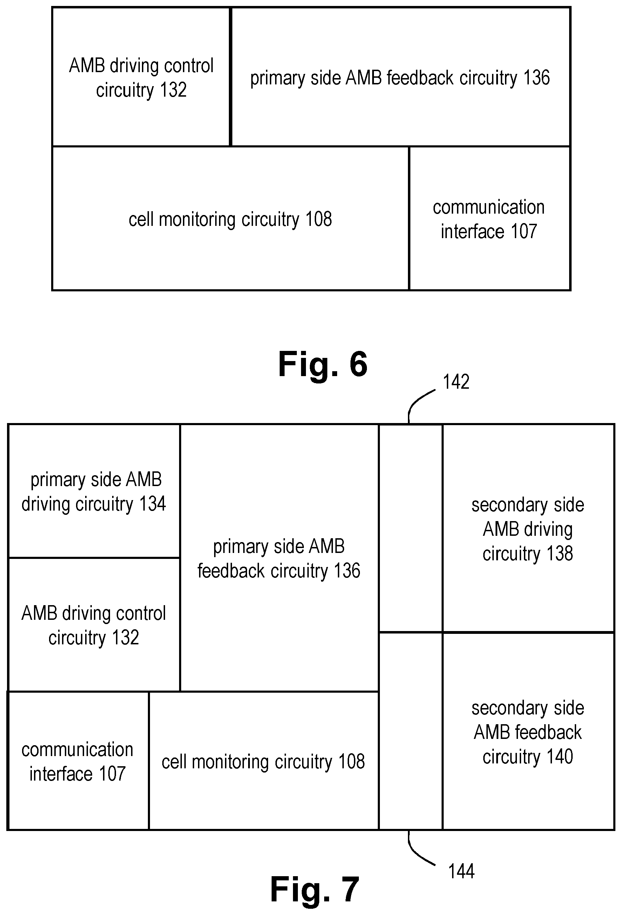

Fig. 6 shows a schematic block diagram of an exemplary charge monitoring device 100 in a second exemplary implementation of the charge monitoring system 130. In the second exemplary implementation, the charge monitoring device additionally comprises the AMB driving control circuitry 132 and the primary side AMB feedback circuitry 136, in order to enhance the functional integration of the charge monitoring device 100. Accordingly, in the second exemplary implementation of the charge monitoring system 130, the circuitry of the charge monitoring device 100 can also perform the functionalities of the AMB driving control circuitry 132 described above and the functionalities of the primary side AMB feedback circuitry 136 described above. Especially, in the second exemplary implementation, the cell monitoring circuit 108, the AMB driving control circuitry 132 and the primary side AMB feedback circuitry 136 may be integrated into a common integrated circuit (or "common ASIC"), for example provided on a same printed circuit board.

In the second exemplary implementation, the charge transferring device 110 comprises the charge transfer circuitry 116, the primary side (AMB) driving circuitry 134, the secondary side (AMB) driving circuitry 138, and the secondary side feedback circuitry 140. The charge transferring device 110 is communicatively coupled to the charge monitoring device 100 through the (AMB) communication channel 106". Especially, the AMB driving control circuitry 132 of the charge monitoring device 100 is communicatively coupled to the primary side (AMB) driving circuitry 134, the secondary side (AMB) driving circuitry 138, and the secondary side feedback circuitry 140 of the associated charge transferring device 110 through the (AMB) communication channel 106", so as to enable the charge monitoring device 100 to control the operation of the associated charge transferring device 110.

The second exemplary implementation of the charge monitoring system 130 has the advantage that the functional integration of the charge monitoring device 100 is enhanced, allowing to integrate the functionalities for cell monitoring and a part of the functionalities of active balancing in a single device.

Fig. 7 shows a schematic block diagram of an exemplary charge monitoring device 100 in a third exemplary implementation of the charge monitoring system 130. In the third exemplary implementation, the charge monitoring device 100 additionally comprises the AMB driving control circuitry 132, the primary side (AMB) driving circuitry 134, the primary side AMB feedback circuitry 136, the secondary side (AMB) driving circuitry 138, and the secondary side feedback circuitry 140 in order to enhance the functional integration of the charge monitoring device 100. Furthermore, the charge monitoring device additionally comprises the first isolation barrier 142 and the second isolation barrier 144 to galvanically isolate the circuits, which are electrically connected to the secondary side of the charge transferring device 110 from the circuits, which are electrically connected to the primary side of the charge transferring device 110. Accordingly, in the third exemplary implementation of the charge monitoring system 130, the circuitry of the charge monitoring device 100 can also perform the functionalities of the AMB driving control circuitry 132, the primary side (AMB) driving circuitry 134, the primary side AMB feedback circuitry 136, the secondary side (AMB) driving circuitry 138, and the secondary side feedback circuitry 140 described above. Especially, in the third exemplary implementation, the cell monitoring circuit 108, the AMB driving control circuitry 132, the primary side (AMB) driving circuitry 134, the primary side AMB feedback circuitry 136, the secondary side (AMB) driving circuitry 138, and the secondary side feedback circuitry 140 may be integrated into a common integrated circuit (or "common ASIC") , for example provided on a same printed circuit board.

In the third exemplary implementation, the charge transferring device 110 comprises the charge transfer circuitry 116. The charge transferring device 110 is communicatively coupled to the charge monitoring device 100 through the (AMB) communication channel 106‴. Especially, the primary side (AMB) driving circuitry 134 and the secondary side (AMB) driving circuitry 138 of the charge monitoring device 100 are communicatively coupled to the charge transfer circuitry 116 of the associated charge transferring device 110 through the (AMB) communication channel 106"', so as to enable the charge monitoring device 100 to control the operation of the associated charge transferring device 110.

The third exemplary implementation of the charge monitoring system 130 has the advantage that the functional integration of the charge monitoring device 100 is further enhanced, allowing to integrate the functionalities for cell monitoring and most of the functionalities of active balancing in a single device. Furthermore, integrating the isolation between the primary and secondary driving and feedback circuitries, avoids the need for providing external isolators (or external isolation circuitry).

In a fourth implementation, the charge monitoring system 130, the charge transferring device 110 in addition to the circuits of the third exemplary implementation also comprises the charge transfer circuitry 116.

The fourth exemplary implementation of the charge monitoring system 130 has the advantage that the functional integration of the charge monitoring device 100 is further enhanced, allowing to fully integrate the functionalities for cell monitoring and the functionalities of active balancing in a single device.

In the first to fourth exemplary implementation, the charge monitoring device 100 and the charge transferring device 110 do not require additional busbars, buffer capacitors or batteries. Instead, the charge monitoring device 100 and the charge transferring device 110 can utilize the existing connections in the HV power supply system 10 and the additional harness connecting two adjacent battery modules 150. These existing connections can also be integrated with the communication lines 106 into one harness to simplify providing a compact solution within the power supply system 10.

In the first to fourth exemplary implementation, the functionalities of the cell monitoring circuitry 108 and of the AMB control circuitry 132 may be realized by software, hardware, or software in cooperation with hardware. For example, the cell monitoring circuitry 108 and of the AMB control circuitry 132 may (respectively or together) comprise a processor, like a micro-controller and a memory, like a ROM (Read Only Memory), or a RAM (Random Access Memory). In another example, the cell monitoring circuitry 108 and of the AMB control circuitry 132 may be realized by using general-purpose processors, like microcontroller, special-purpose processors, or FPGAs (Field Programmable Gate Array) that can be programmed. Furthermore, each circuit of the charge monitoring device 100 can be realized as a dedicated integrated circuit and the dedicated integrated circuits (or "dedicated ASIC") are assembled to form the charge monitoring device 100. Alternatively, the functionalities of each circuit may be integrated into a common integrated circuit (or "common ASIC"), which forms charge monitoring device 100. Similar, each circuit of the charge transferring device 110 can be realized as a dedicated integrated circuit and the dedicated integrated circuits (or "dedicated ASIC") are assembled to form the charge transferring device 110. Alternatively, the functionalities of each circuit may be integrated into a common integrated circuit (or "common ASIC"), which forms charge transferring device 110.

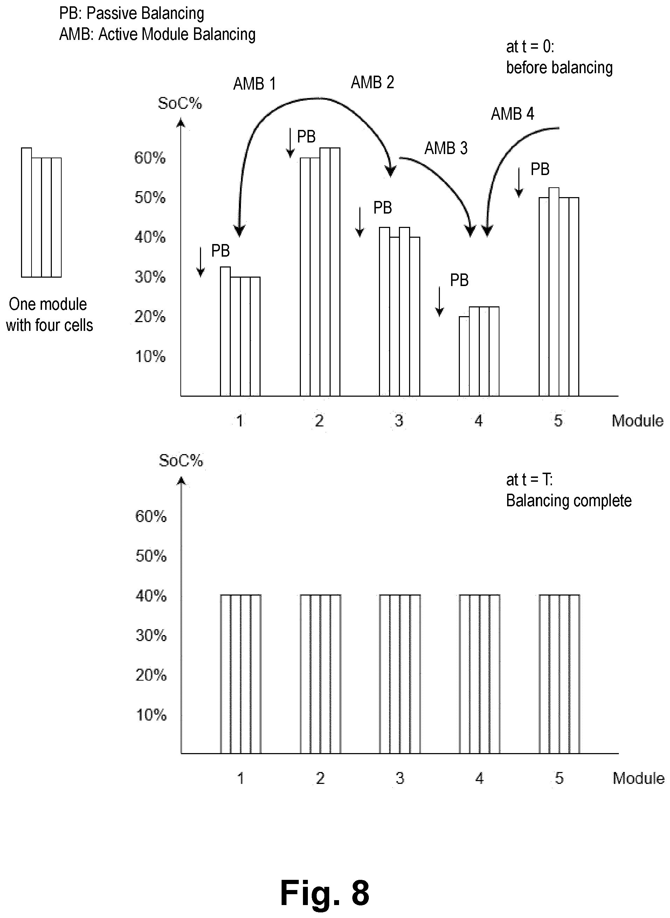

Fig. 8 illustrates a first example of a charge balancing procedure, which is performed by the balancing control device 120 and the charge monitoring devices 100 in conjunction with the charge transferring device 110 in the charge monitoring system 130 according to the exemplary balancing control method. In the illustrated example, the HV battery 152 has five battery modules 150, wherein each battery module 150 has four battery cells (or "battery cell bricks"). Four charge transferring devices 110 are arranged between the five battery modules 150, namely AMB 1 between Module 1 and Module 2, AMB2 between Module 2 and Module 3, AMB3 between Module 3 and Module 4, and AMB4 between Module 4 and Module 5. At t = 0, before balancing is started, the balancing control device 120 had issued a charge balancing instruction to the charge monitoring devices 100 associated with the battery modules 150, so as to urge the charge monitoring devices 100 to equalize the charge states of the battery modules 150 and of the battery cells arranged in the battery modules 150.

In the illustrated example, each of the charge monitoring devices 100 discharges the associated balancing target battery cells according to the cell charge states (the cell SOCs), here at a rate of 2% SOC per time unit T, to reach at a minimum SOC value among the SOCs of the battery cells arranged in the corresponding battery module 150 ("passive balancing"). In addition, each of the charge monitoring devices 100 controls the associated charge transferring devices 110 to transfer charge between the balancing target battery modules 150 and the adjacent battery modules 150, here at a rate of 10%SOC per time unit T, to reach at an average SOC value among the battery modules 150 ("active balancing"). According to the module charge states (here the module SOCs), the charge monitoring devices 100 associated with AMB1, controls AMB1 to transfer charge from Module 2 to Module 1, the charge monitoring device 100 associated with AMB2, controls AMB2 to transfer charge from Module 2 to Module 3, the charge monitoring device 100 associated with AMB3, controls AMB3 to transfer charge from Module 3 to Module 4 and the charge monitoring device 100 associated with AMB4, controls AMB4 to transfer charge from Module 5 to Module 4.

As a result, at t =T, when the balancing is completed, the cell charge states (SOC) of the battery cells are balanced within each battery module 150 and the module charge states (SOC) of the battery modules 150 are also balanced between the battery modules 150.

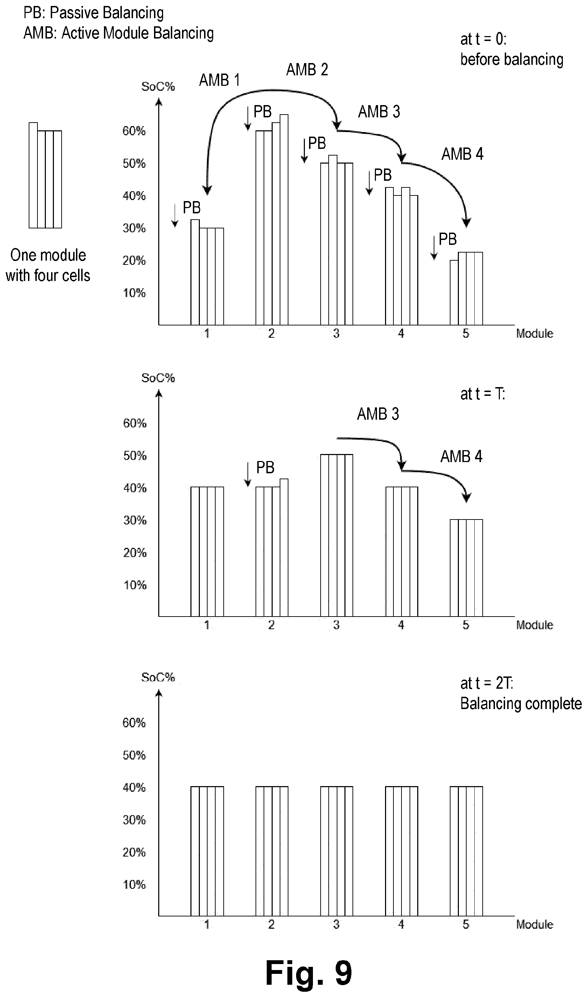

Fig. 9 illustrates a second example of a charge balancing procedure, which is performed by balancing control device 120 and the charge monitoring devices 100 in conjunction with the charge transferring device 110 in the charge monitoring system 130 according to the exemplary balancing control method. Here the same assumptions are made as for Fig. 8, but different charge states are chosen at t = 0, before balancing is started. According to the module charge states (here the module SOCs), in a first balancing cycle from t = 0 to t = T, each of the charge monitoring devices 100 discharges the associated balancing target battery cells to reach at a minimum SOC value among the SOCs of the battery cells arranged in the corresponding battery module 150 ("passive balancing"). In addition, each of the charge monitoring devices 100 controls the associated charge transferring devices 110 to transfer charge between the balancing target battery modules 150 and the adjacent battery modules 150, here at a rate of 10%SOC per time unit T, to reach at an average SOC value among the battery modules 150 ("active balancing"). According to the module charge states (here the module SOCs), the charge monitoring devices 100 associated with AMB1, controls AMB1 to transfer charge from Module 2 to Module 1, the charge monitoring device 100 associated with AMB2, controls AMB2 to transfer charge from Module 2 to Module 3, the charge monitoring device 100 associated with AMB3, controls AMB3 to transfer charge from Module 3 to Module 4 and the charge monitoring device 100 associated with AMB4, controls AMB4 to transfer charge from Module 4 to Module 5.

However, in the second example, at t =T, the cell charge states (SOC) of the battery cells are balanced only within Module 1, Module 3, Module 4, and Module 5, but not within Module 2, where one battery cell has not reach at the minimum SOC value among the SOCs of the battery cells arranged in Module 2. Further, the module charge states (SOC) of the battery modules 150 are only balanced between Module 1 and Module 2, while Module 3, Module 4 and Module 5 have not reached the target module charge state, i.e. the average SOC value among the battery modules 150. As a consequence, in a second balancing cycle from t = T to t = 2T, the charge monitoring device 100 of Module 2 discharges the remaining battery cell with higher SOC ("passive balancing"). Further, in the second balancing cycle from t = T to t = 2T, the charge monitoring device 100 associated with Module 3 controls AMB3 to transfer charge from Module 3 to Module 4 and the charge monitoring device 100 associated with AMB4, controls AMB4 to transfer charge from Module 4 to Module 5.

As a result, at t =2T, when the balancing is completed, the cell charge states (SOC) of the battery cells are balanced within each battery module 150 and the module charge states (SOC) of the battery modules 150 are also balanced between the battery modules 150.

Accordingly, as illustrated in Figs. 8 and 9, the charge monitoring devices 100, the balancing control device 120, and the balancing control method of the present disclosure allow not only to balance the charge states of the battery cells arranged within the battery modules 150 on a cell level, but also to balance the battery module charge states of the battery modules 150 on a battery module level. This facilitates improving the charge balancing efficiency for balancing the battery modules of a HV battery, since it facilitates enhancing the balancing efficiency in the charge monitoring system 130 by actively balancing the battery module charge states on a battery module level.

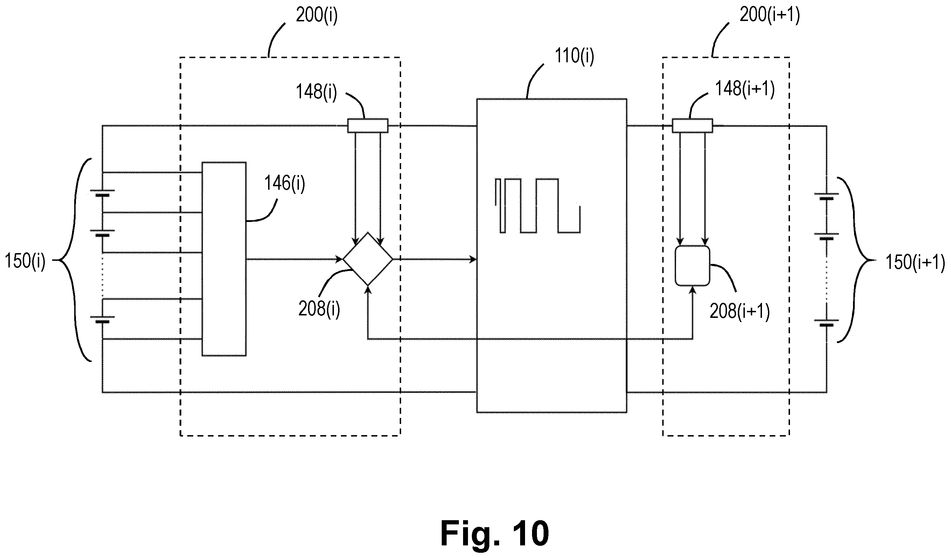

Fig. 10 shows a schematic block diagram of two second exemplary charge monitoring devices 200, in particular the adjacent second exemplary charge monitoring device 200(i) and 200 (i+1). The cell monitoring circuitry 208 of the second exemplary charge monitoring device 200 has the functionalities as the cell monitoring circuitry 108 of the first exemplary charge monitoring device 100. In addition, the cell monitoring circuitry 208 is configured to control the associated charge transferring device 110 to generate an excitation signal for performing Electrochemical Impedance Spectroscopy of the associated battery module 150 (or 150 (i)) and of the adjacent battery module 150 (or 150(i+1)), which is connected to the same charge transferring device 110 (or 110(i)).

Electrochemical Impedance Spectroscopy, also known as "EIS", is based on a safe perturbation technique, which allows to model the electrochemical process inside the battery modules 150. This is achieved by exciting the battery modules 150 or a part of the battery modules 150 with sinusoidal current and voltage waveforms having different frequencies as EIS excitation signal. Further, the cell monitoring circuitry 208(i) is configured to detect, for the plurality of battery cells arranged in the associated battery module 150(i), a response to the EIS excitation signal. For example, the response may be detected by using the cell voltage detection circuitry 146(i) for detecting the voltage response of the battery cells of the associated battery module 150(i) to the EIS excitation signal, and by using the module current detection circuitry 148(i) for detecting the current response of the battery module 150(i) (which corresponds to the current response of the battery cells of the associated battery module 150(i)) to the EIS excitation signal.

Optionally, the cell monitoring circuitry 208(i) is configured to detect, for the plurality of battery cells arranged in the adjacent battery module 150(i+1), a response to the EIS excitation signal. For example, the response may be detected by using the module current detection circuitry 148(i+1) for detecting the current response of the adjacent battery module 150(i+1) (which corresponds to the current response of the battery cells of the adjacent battery module 150(i+1)) to the EIS excitation signal. In some implementations, the current response of the adjacent battery module 150(i+1) is detected by the cell monitoring circuitry 208(i+1) of the charge monitoring device 200 (i+1) associated with the adjacent battery module 150(i+1) and then transmitted to the charge monitoring device 200(i), which controls the associated charge transferring device 110(i) to generate the EIS excitation signal. This allows the controlling charge transferring device 110(i) to perform EIS spectroscopy for the two battery modules 150(i) and 150(i+1), which are electrically connected to the associated charge transferring device 110(i).

In some instructions, the charge monitoring device 200 is configured to perform the EIS spectroscopy operation in response to receiving an EIS instruction from the balancing control device 120. Especially, the balancing control device 120 may determine one or more (e.g. all or a part) of the battery modules 150 as EIS target battery module(s) 150. The balancing control device 120 may then generate and transmit the EIS instruction to the charge monitoring device(s) 100 associated with the determined EIS target battery module(s) 150 through the communication channel 122. In response to receiving the EIS instruction, the charge monitoring device(s) 100 may control the associated charge transferring device(s) 110 to generate the EIS excitation signal.

In some implementations, the EIS instruction may include trigger information indicating to start the EIS spectroscopy operation, and the charge monitoring device(s) 100, which receive the EIS instruction may start (or "execute") the EIS spectroscopy operation with predefined (or "preconfigured") parameters in response to receiving the EIS instruction. In some implementations, the EIS instruction may additionally include EIS parameter information, and the charge monitoring device(s) 100, which receive the EIS instruction may start the EIS spectroscopy operation by using parameters obtained from the EIS instruction.

In this manner, the charge monitoring device 200 in interplay with the associated charge transferring device 110 allow to perform online EIS spectroscopy in the charge monitoring system 130. Performing online EIS spectroscopy in the charge monitoring system 130 allows to monitor the SOH of the plurality of battery modules 150 over the lifetime, without the need of using additional hardware that is required in conventional charge monitoring systems to generate the EIS excitation signal. Furthermore, using the charge transferring device(s) 110 for generating the EIS excitation signal facilitates to generate a sinusoidal current sine wave with low total harmonic distortion (THD) as excitation signal (or perturbation signal), so that the data processing effort for determining the impedance response can be reduced and the overall accuracy of the impedance measurement can be increased. Accordingly, the charge monitoring system 130 facilitates performing EIS spectroscopy of the battery modules 150 (or a part of them) with high efficiency and without unnecessary losses.

### REFERENCE NUMERALS

| | |
|---|---|
| 10 | Power supply system |
| 100, 200 | Charge monitoring device |
| 102, 104 | (CMB) Connection nodes |
| 105 | (CMB) Cell connector |
| 106 | (AMB) Communication channel |
| 107 | (CMB) Communication interface |
| 108, 208 | Cell monitoring circuitry |
| 110 | Charge transferring device |
| 111, 113 | (AMB) Module connector |
| 112, 114 | (AMB) Connection nodes |
| 116 | Charge transfer circuitry |
| 118 | (AMB) Isolation barrier |
| 120 | Balancing control device |
| 122 | (CMB) Communication channel |
| 130 | Charge monitoring system |
| 132 | Primary side (AMB) driving control circuitry |
| 134 | Primary side (AMB) driving circuitry |
| 136 | Primary side (AMB) feedback circuitry |
| 138 | Secondary side (AMB) driving circuitry |
| 140 | Secondary side (AMB) feedback circuitry |
| 142 | First isolation barrier |
| 144 | Second isolation barrier |
| 146 | (CMB) Cell voltage detection circuitry |
| 148 | (CMB) Module current detection circuitry |
| 150 | Battery module |
| 152 | (HV) Battery |
| 154, 156 | (HV) Battery terminals |

## Claims

1. A charge monitoring device (100, 200), which comprises
cell monitoring circuitry (108, 208), which in operation, detects cell charge states of a plurality of battery cells arranged in a battery module (150) electrically connected to the charge monitoring device (100, 200), and which in operation, balances the charge state of at least one balancing target battery cell among the plurality of battery cells;
wherein the charge monitoring device (100, 200), in operation, is communicatively coupled to a charge transferring device (110), the charge transferring device (110) being configured to transfer charge between the battery module (150) connected to the charge monitoring device (100, 200) and an adjacent battery module (150); and
wherein the cell monitoring circuitry (108, 208), in operation, controls the charge transfer between the battery module (150) connected to the charge monitoring device (100, 200) and the adjacent battery module (150).

2. The charge monitoring device (100, 200) according to claim 1, wherein the cell monitoring circuitry (108, 208), in operation, controls the charge transfer between the battery module (150) and the adjacent battery module (150) based on a balancing instruction determined by a balancing control device (120);
wherein the balancing instruction comprises one or more of (i) identification information indicating a balancing target charge monitoring device (100, 200), (ii) module balancing duration information indicating a duration of the charge transfer, (iii) target module charge state information indicating a target module charge state for the battery module (150); and (iv) module balancing direction information indicating a direction of the charge transfer.

3. The charge monitoring device (100, 200) according to claim 2, wherein the cell monitoring circuitry (108, 208), in operation, controls the operation of the cell monitoring circuitry (108, 208) based on the balancing instruction determined by the balancing control device (120);
wherein the balancing instruction comprises one or more of (i) cell balancing information indicating at least one balancing target battery cell, (ii) cell balancing duration information indicating one or more cell balancing duration(s) for balancing the at least one balancing target battery cell, and (iii) target cell charge state information indicating a target cell charge state for the at least one balancing target battery cell.

4. The charge monitoring device (100, 200) according to one of claims 1 to 3, wherein the cell monitoring circuitry (108, 208), in operation, generates switching control signals for controlling the charge transfer between the battery module (150) and the adjacent battery module (150) and transmits the switching control signals to the charge transferring device (110);
optionally, wherein the cell monitoring circuitry (108, 208) comprises a charge transferring microcontroller, which generates the switching control signals.

5. The charge monitoring device (100, 200) according to one of claims 1 to 4, wherein the charge monitoring device (100, 200) further comprises primary side feedback circuitry (136), which, in operation, detects a voltage applied to a primary side of the charge transferring device (110) and/or a current flowing through the primary side of the charge transferring device (110), wherein the primary side of the charge transferring device (110) is electrically connected to the battery module (150) being electrically connected to the charge monitoring device (100, 200),
wherein the cell monitoring circuitry (108, 208), in operation, regulates the charge transfer between the battery module (150) connected to the charge monitoring device (100, 200) and the adjacent battery module (150) based on at least one of (i) the actual voltage applied to the primary side of the charge transferring device (110) detected by the primary side feedback circuitry (136), and/or (ii) the actual current flowing through the primary side of the charge transferring device (110) detected by the primary side feedback circuitry (136);
optionally, wherein the primary side feedback circuitry (136) is integrated on a same semiconductor chip as the cell monitoring circuitry (108, 208).

6. The charge monitoring device (100, 200) according to one of claims 1 to 5, wherein the charge monitoring device (100, 200) further comprises secondary side feedback circuitry (140), which, in operation, detects a voltage applied to a secondary side of the charge transferring device (110) and/or a current flowing through the secondary side of the charge transferring device (110), wherein the secondary side of the charge transferring device (110) is electrically connected to the adjacent battery module (150),
wherein the cell monitoring circuitry (108, 208), in operation, regulates the charge transfer between the battery module (150) connected to the charge monitoring device (100, 200) and the adjacent battery module (150) based on at least one of (i) the actual voltage applied to the secondary side of the charge transferring device (110) detected by the secondary side feedback circuitry (140) and/or (ii) the actual current flowing through the secondary side of the charge transferring device (110) detected by the secondary side feedback circuitry (140);
optionally, wherein the secondary side feedback circuitry (140) is integrated on a same semiconductor chip as the cell monitoring circuitry (108, 208).

7. The charge monitoring device (200) according to one of claims 1 to 6, wherein the cell monitoring circuitry (108, 208), in operation,
- controls the charge transferring device (110) to generate an electrochemical impedance spectroscopy, EIS, excitation signal for performing EIS of the battery cells of the battery module (150) connected to the charge monitoring device (200); and,
- detects, for the plurality of battery cells arranged in the battery module (150), a response to the EIS excitation signal;
optionally, wherein the cell monitoring circuitry (108, 208), in operation, controls the generation of the excitation signal for performing EIS based on an EIS instruction determined by a balancing control device (120).

8. The charge monitoring device (100, 200) according to one of claims 1 to 7, wherein the charge transferring device (110) comprises a bidirectional voltage converter (116), and wherein a primary side of the bidirectional voltage converter (116) is electrically connected to the battery module (150) connected to the charge monitoring device (100, 200) and a secondary side of the bidirectional voltage converter (116) is electrically connected to the adjacent battery module (150).

9. A charge monitoring system (130) comprising:
a plurality of charge monitoring devices (100, 200) according to one of claims 1 to 8, wherein respectively one of the plurality of charge monitoring devices (100, 200), in operation, monitors one battery module (150) among a plurality of battery modules (150), which are electrically connected in series to form a high voltage battery (152); and
at least one charge transferring device (110), wherein respectively one of the at least one charge transferring devices (110) is electrically connected between two adjacent battery modules (150) of the high voltage battery (152), so as to enable charge transfer between the battery modules (150) connected to the two adjacent charge monitoring devices (100, 200).

10. A charge monitoring method, performed by a balancing control device (120), for balancing charge states of a plurality of battery cells being arranged in a plurality of battery modules (150), wherein the plurality of battery modules (150) are electrically connected in series to form a high voltage battery (152), the method comprising:
acquiring (S210, S310) cell charge states of the plurality of battery cells from a plurality of charge monitoring devices (100, 200), which are electrically connected to the plurality of battery modules (150);
determining (S220, S320) module charge states of the plurality of battery modules (150) from the acquired charge states;
determining (S230, S330), a balancing target battery module (150) among the plurality of battery modules (150) based on the module charge states; and
transmitting (S240, S350) a balancing instruction to a balancing target charge monitoring device (100, 200), which is electrically connected to the target battery module (150);
wherein the balancing instruction comprises cell balancing information instructing the balancing target charge monitoring device (100, 200) to balance the charge states of the plurality of battery cells arranged in the target battery module (150), and module balancing information instructing the balancing target charge monitoring device (100, 200) to transfer charge between the balancing target battery module (150) and an adjacent battery module (150).

11. The charge monitoring method according to claim 10, wherein the balancing instruction comprises one or more of (i) identification information indicating a balancing target charge monitoring device (100, 200), (ii) module balancing duration information indicating a duration of the charge transfer, (iii) target module charge state information indicating a target module charge state for the battery module (150); and (iv) module balancing direction information indicating a direction of the charge transfer.

12. The charge monitoring method according to one of claims 10 or 11, wherein the balancing instruction comprises one or more of (i) cell balancing information indicating at least one balancing target battery cell, (ii) cell balancing duration information indicating one or more cell balancing duration(s) for balancing the at least one balancing target battery cell, and (iii) target cell charge state information indicating a target cell charge state for the at least one balancing target battery cell.

13. The charge monitoring method according to one of claims 10 to 12, further comprising determining an electrochemical impedance spectroscopy, EIS, target battery module (150) among the plurality of battery modules (150), and transmitting an EIS instruction to an EIS target charge monitoring device (200) being electrically connected to the EIS target battery module (150), so as to urge the EIS target charge monitoring device (200) (i) to control an charge transferring device (110) associated with the EIS target battery module (150) to generate an EIS excitation signal, and (ii) to detect, for the plurality of battery cells arranged in the EIS target battery module (150), a response to the EIS excitation signal.

14. The charge monitoring method according to one of claims 10 to 13, wherein the determining of a balancing target battery module (150) comprises the determining of a plurality of balancing target battery modules (150), and
the transmitting of the balancing instruction comprises transmitting the balancing instruction to each balancing target charge monitoring device (100, 200), which is electrically connected to at least one of the plurality of target battery modules (150).

15. The charge monitoring method according to claim 14, wherein the balancing instruction comprises, for each balancing target charge monitoring device (100, 200), one or more of (i) identification information indicating the balancing target charge monitoring device (100, 200), (ii) module balancing duration information indicating a duration of the charge transfer, (iii) target module charge state information indicating a target module charge state for the battery module (150); and (iv) module balancing direction information indicating a direction of the charge transfer.
